# EUROPÄISCHE PATENTANMELDUNG

(11) **EP 3 181 975 A1**
(43) Veröffentlichungstag der Anmeldung: **21.06.2017**
(21) Anmeldenummer: 16002525.0
(22) Anmeldetag: 28.11.2016
(51) Int. Cl.: F16L 23/08, F02M 35/10, F16L 51/00

(54) **VERBINDUNGSEINICHTUNG ZWISCHEN EINEM TURBINENGEÄUSE EINES ABGASTRURBOLADERS UND EINEM ANSCHLUSSGHÄUSE**

(30) Priorität: 19.12.2015 DE 102015016660
(71) Anmelder: Neander Motors AG, 24143 Kiel (DE)
(72) Erfinder: Brüstle, Claus, D-74228 Nordheim (DE)

(57) **Zusammenfassung**

Diese Verbindungseinrichtung 1 ist zwischen einem Turbinengehäuse 2 eines Abgasturboladers 3 und einem Anschlussgehäuse, vorzugsweise Abgaskrümmergehäuse 4 einer Brennkraftmaschine vorgesehen, wobei das Turbinengehäuse und das Abgaskrümmergehäuse unter Vermittlung einer Bandklammer 5 in Lage gehalten werden, die mit im Querschnitt V-förmig ausgerichteten über einen Steg 6 verbundenen ersten und zweiten Schenkeln 7,8 auf an äußeren Umfängen des Turbinengehäuses 2 und des Abgaskrümmergehäuses 4 angebrachten korrespondierenden und nach Art von aneinandergesetzten ersten und zweiten Ringflanschen 13,14 ausgeführten Stützvorrichtungen 15,16 einwirken, dergestalt, dass einerseits erste und zweite Spannflächen 17,18 der Schenkel mit dritten und vierten Spannflächen 19,20 der Stützvorrichtungen 15, 16 an ersten und zweiten Verbindungsebenen und andererseits erste und zweite radiale Stützflächen 21,22 an einer Stützebene SE der Stützvorrichtungen 15,16 miteinander in Wirkverbindung stehen.

Zur Optimierung der Verbindungseinrichtung ist zwischen der zweiten Spannfläche 18 des zweiten Schenkels 8 und einer Innenstützfläche 23 des zweiten Ringflansches 14 ein Zwischenring 24 wirksam ist, der über die zweite und vierte Spannflächen 18, 20 sowie einem Spannflächenabschnitt 25 des Zwischenrings 24 gegen die Innenstützfläche 23 des zweiten Ringflansches 14 gespannt wird.

## Beschreibung

Die Erfindung bezieht sich auf eine Verbindungseinrichtung zwischen einem Turbinengehäuse eines Abgasturboladers und einem Anschlussgehäuse, vorzugsweise Abgaskrümmergehäuse einer Brennkraftmaschine.

Es ist eine Abgasturboladereinrichtung bekannt, US 2007/0130943 A1, die einen Turbolader mit einem Turbinengehäuse und einem Zentrumgehäuse umfasst. An einer Randzone der beiden Gehäuse sind letztere unter Zwischenschaltung einer Dichtung zusammengesetzt. Die Verbindungsebene wird einerseits durch einen radialen Flansch des Zentrumgehäuses und andererseits eine radiale Endfläche eines Ringabschnitts des Turbinengehäuses gebildet. Zur Verbindung des Turbinengehäuses und des Zentrumgehäuses dient ein Spannband, dessen V-förmige Schenkel mit korrespondierenden Schrägflächen des radialen Flansches und des Ringabschnittes zusammenwirken. Eine Innenseite des Ringabschnitts wird über das Spannband gegen ein peripheres Ringelement gespannt, das mit einem Stützvorsprung gegen eine Schulter des Zentrumgehäuses gespannt wird. Eine Stützebene zwischen Stützvorsprung und Schulter verläuft schräg zu einer Mittellängseben des Turboladers.

Die US 2,653,836 befasst sich mit einer Bandklammer, die ein Paar rohrförmiger oder zylindrischer Körper umringt und umgreift, und zwar in der Weise, dass sie in axialer Richtung in Lage gehalten werden. Die Bandklammer weist im Querschnitt betrachtet V-förmige in Richtung einer Mittellängslinie der Körper sich erweiternde mittels eines Verbindungsstegs verbundene Schenkel auf. Diese Schenkel stützen sich an korrespondierenden ringförmigen Spannflanschen der Köper mit definierter Kraft ab, so dass sich eine flüssigkeits- oder gasdichte Verbindung ergibt.

Aus der DE 10 2011 016 223 A1 geht ein Bandklammer mit V-förmigen Schenkeln und einem Verbindungsteg hervor, der ein Ringband trägt. Die Bandklammer bzw. das Ringband ist durch Enden voneinander getrennt, die einen relativ geringen Abstand zueinander aufweisen. Benachbart der Enden sind auf dem Ringband Lagerkonsolen befestigt, die mit einem Spannbolzen in Wirkverbindung stehen.

Es ist Aufgabe der Erfindung eine Verbindungseinrichtung für ein heiße Abgase einer Brennkraftmaschine führendes ein Turbinengehäuse und ein Abgaskrümmergehäuse umfassendes Leitungssystem zu konzipieren, das konstruktiv einfach und leicht umsetzbar ist und darüber hinaus auch hohe dynamische und thermischen Belastungen aufnimmt. Dabei sollte aber auch die Verbindungseinrichtung für ein Leitungssystem geeignet sein, dessen Turbinengehäuse und Abgaskrümmergehäuse bezüglich Werkstoffspezifikation richtungsweisend ist.

Nach der Erfindung wird diese Aufgabe durch die Merkmale der Patentansprüche 1 und 9 gelöst. Weitere die Erfindung ausgestaltende Merkmale sind in den Unteransprüchen enthalten.

Die mit der Erfindung hauptsächlich erzielten sind darin zu sehen, dass die Verbindungseinrichtung mit ihren ausgeklügelten technischen Merkmalen, nämlich die Ringflansche des Turbinengehäuses und des Abgaskammergehäuses umgreifende Spannklammer in Verbindung mit dem als Kraftübertragungselement ausgebildeten Zwischenring bei der brennkraftmaschinentechnischen Anwendung Maßstäbe setzt. Dabei zeichnet sich diese Verbindungseinrichtung zum einen dadurch aus, dass sie auch ausgeprägten dynamischen Kräften und Temperatureinwirkungen in ausgezeichneter Weise standhält. Zum andern ist hervorzuheben, dass die Ausbildung und Anordnung des Kraftübertragungselements bzw. des Zwischenrings auch Voraussetzungen schafft, damit für das Turbinengehäuse und das Abgaskrümmergehäuse unterschiedliche Werkstoffe einsetzbar sind. So ist es möglich für das Turbinengehäuse Eisenmetall und für das Abgaskrümmergehäuse Leichtmetall, Verbundwerkstoff oder dgl. zu verwenden, was die freie Gestaltung dieser Gehäuse begünstigt.

Beispiel gebend ist wie der Zwischenring über den zweiten Schenkel und die Innenstützfläche verspannt wird. Baulich günstig Voraussetzungen ergeben sich, wenn zur Bildung einer stufenförmigen Ausnehmung zwischen den Ringflanschen der zweite Ringflansch einen kleiner Außendurchmesser als der erste Ringflansch besitzt. Dies unterstützt die Gestaltung des Zwischenrings dadurch, dass er mit dem Axialabschnitt berührungsfrei in die Ausnehmung hineinragt. Dabei umfasst der vom Axialabschnitt weggeführte Radialabschnitt den Spannflächenabschnitt, der mit der Innenstütze in Wirkverbindung steht. Denkbar mit vergleichbar gutem Ergebnis ist aber auch, dass der Zwischenring über einen äußeren Axialabschnitt und einen zu einer Mittellängsebene des Turbinengehäuse sowie gleichgerichtet zu den zweiten und vierten Spannflächen verlaufenden mittleren Radialabschnitt verfügt, an den ein innerer Radialabschnitt anschließt, welcher innere Radialabschnitt den Spannflächenabschnitt besitzt, der mit der Innenstützfläche des zweiten Ringflansches in Wirkverbindung steht.

Um die zu erwartenden auf die Verbindungseinrichtung einwirkenden anspruchsvollen Belastungen gut aufzunehmen, besteht der Zwischenring aus Eisenmetall oder einem anderen geeigneten Material. Zur teleologischen Montage des Zwischenrings besteht Letzterer aus Ringhälften oder Ringsegmenten. Schließlich ist der zweite Ringflansch der Verbindungseinrichtung leicht durch eine ringartige Ausnehmung im Abgaskrümmergehäuse darstellbar.

In der Zeichnung sind Ausführungsbeispiele der Erfindung dargestellt, die nachstehend näher erläutert werden.

### Es zeigen

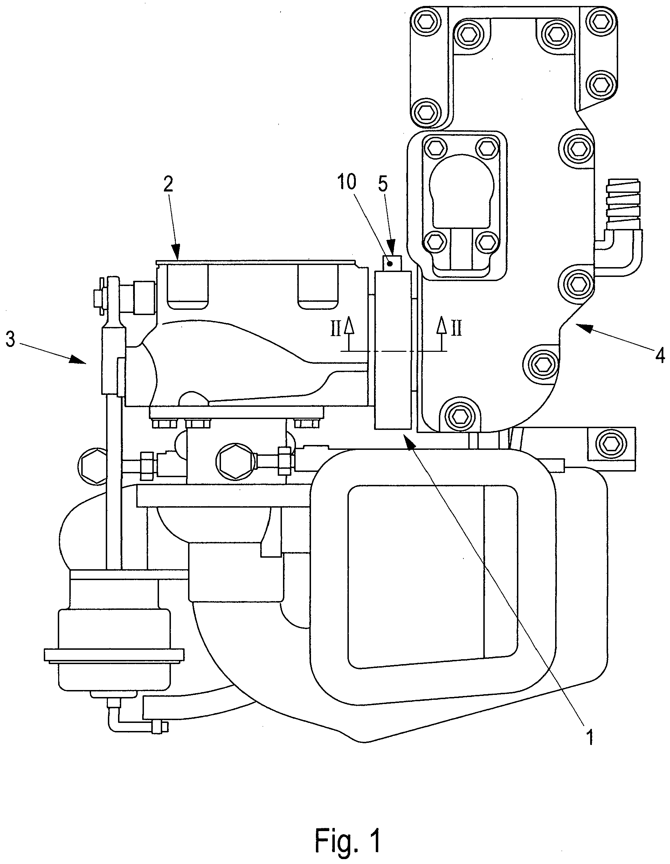

Fig. 1 eine Ansicht von oben auf ein Turbinengehäuse eines Abgasturboladers und ein Abgaskrümmergehäuse einer nicht dargestellten Brennkraftmaschine,
Fig. 2 einen Schnitt nach der Linie II-II der Fig. 1 in größerem Maßstab mit einer einen Zwischenring aufweisenden Verbindungseinrichtung,
Fig. 3 eine Einzelheit X der Fig. 2 mit ersten einer ersten Ausführungsform des Zwischenrings der Verbindungseinrichtung nach Fig. 2,
Fig. 4 eine zweite Ausführungsform des Zwischenrings der Verbindungseinrichtung gemäß Fig. 2,
Fig. 5 eine Hauptansicht des Zwischenrings nach Fig. 2 mit einer ersten Ausführungsform,
Fig. 6 eine Ansicht gemäß Fig. 5 mit einer zweiten Ausführungsform.

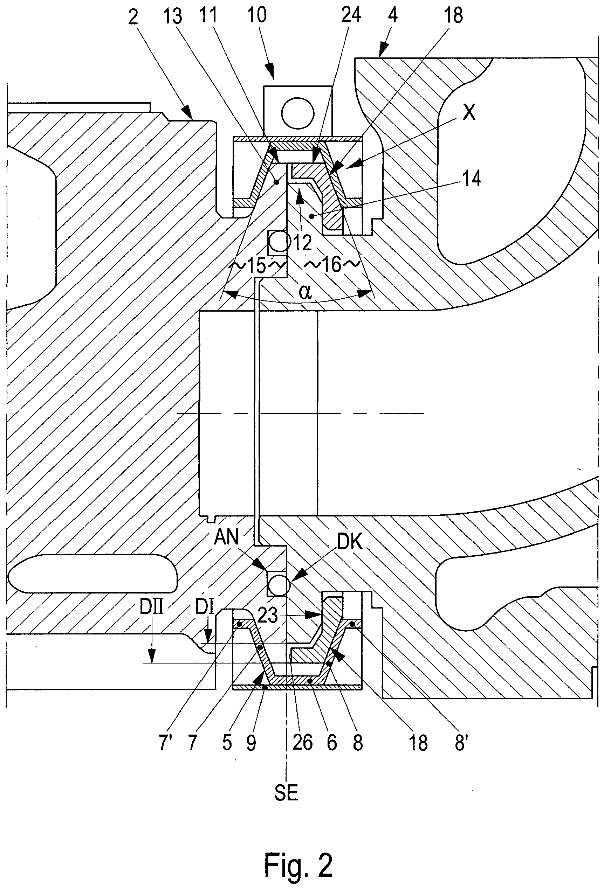

Eine Verbindungseirichtung 1 zum Zusammenbau eines Turbinengehäuses 2 eines Abgasturboladers 3 mit einem Abgaskrümmergehäuse 4, die Bestandteil einer Brennkraftmaschine sind, umfasst eine ringartige Bandklammer 5. Die Bandklammer 5 verfügt über im Querschnitt V-förmig -spitzer Winkel α- ausgerichtete, mittels eines Stegs 6 verbunden erste und zweite Schenkel 7 und 8 -Fig. 2-. Freie Enden der Schenkel 7 und 8 sind mit Stegabwinklungen 7' und 8' vershen. Am äußeren Umfang des Stegs 6 ist ein Versteifungsring 9 fest angebracht. An Ringabschnittenden der Spannbandes ist eine schlossartige Spannvorrichtung 10 mit Stützkonsolen und einer Spannschraube angebracht-DE 10 2011 016 223 A1-.

Die ersten und zweiten Schenkel 7 und 8 der Bandklammer 5 wirken auf an äußeren Umfängen 11 und 12 des Turbinengehäuses 2 und das Abgaskrümmergehäuses 4 angebrachten korrespondierenden und nach Art von aneinandergesetzten ersten und zweiten Ringflanschen 13 und 14 ausgeführten Stützvorrichtungen 15 und 16 ein. Hierzu stehen einerseits erste und zweite Spannflächen 17 und 18 der Schenkel 7 und 8 mit dritten und vierten Spannflächen 19 und 20 der Stützvorrichtungen 15 und 16 und andererseits mit ersten und zweiten radiale Stützflächen 21 und 22 an einer Stützebene SE der Stützvorrichtungen 15 und 16 in Wirkverbindung. In der Stützebene SE ruht ein ringförmiger Dichtkörper DK zwischen dem Turbinengehäuse 2 und Abgaskrümmergehäuse 4, und zwar in einer Ausnehmung AN.

Zwischen der zweiten Spannfläche 18 des zweiten Schenkels 8 und einer Innenstützfläche 23 des zweiten Ringflansches 14 ist ein Zwischenring 24 wirksam. Letzterer wird über die zweite und vierte Spannflächen 18 und 20 sowie einen Spannflächenabschnitt 25 des Zwischenrings 24 gegen die Innenstützfläche 23 des zweiten Ringflansches 14 gespannt wird.

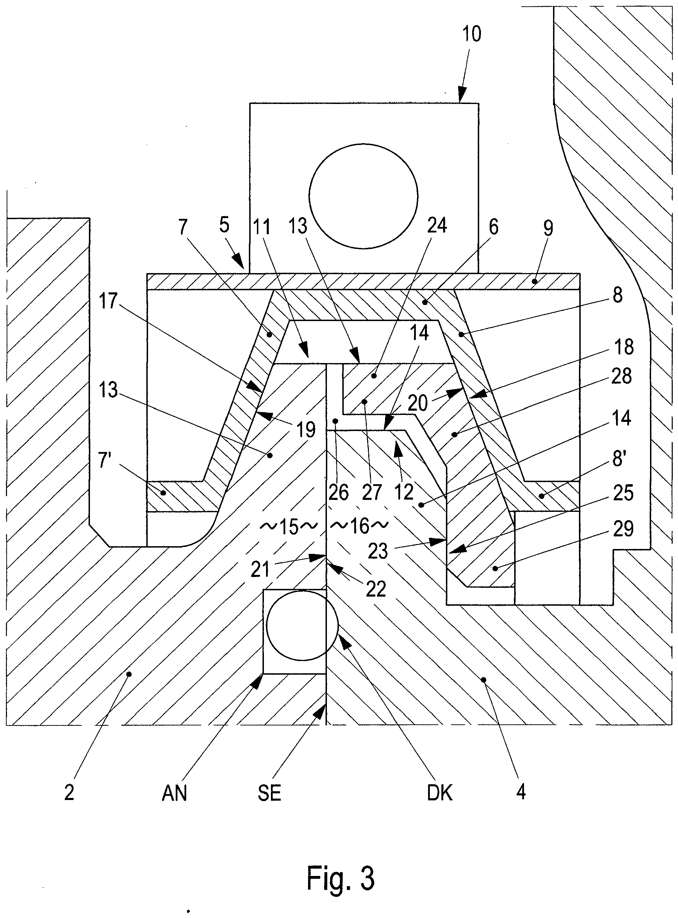

Zur Bildung einer stufenförmigen Ausnehmung 26 zwischen den Ringflanschen 13 und 14 der Außendurchmesser DI des zweiten Ringflansches 14 kleiner ist als Außendurchmesser DII des ersten Ringflansches 13 -Fig. 2-. In die Ausnehmung 26 ragt ein äußerer Axialabschnitt 27 einer ersten Ausführungsform -Fig. 3-, verkörpert durch Zwischenring 24, hinein. Von diesem Axialabschnitt 27 zu einer Mittellängseben (nicht gezeigt) des Turbinengehäuses 2 hin erstreckt sich ein mittlerer Radialabschnitt 28, der gleichgerichtet zu der zweite und vierten Spannflächen 18 und 20 verläuft. An den mittleren Radialabschnitt 28 schließt ein innerer Radialabschnitt 29 an, der den Spannflächenabschnitt 25 besitzt und mit der Innenstützfläche 23 des zweiten Ringflansches 14 abstützend zusammenwirkt. Der Axialabschnitt 27 ist berührungsfrei in der Ausnehmung 26 angeordnet, d.h. ohne Kontakt zum zweiten Ringflansches 14 bzw. dem ersten Ringflansch 13. Sinngemäß trifft dies auch für den mittleren Radialabschnitt 28 zu.

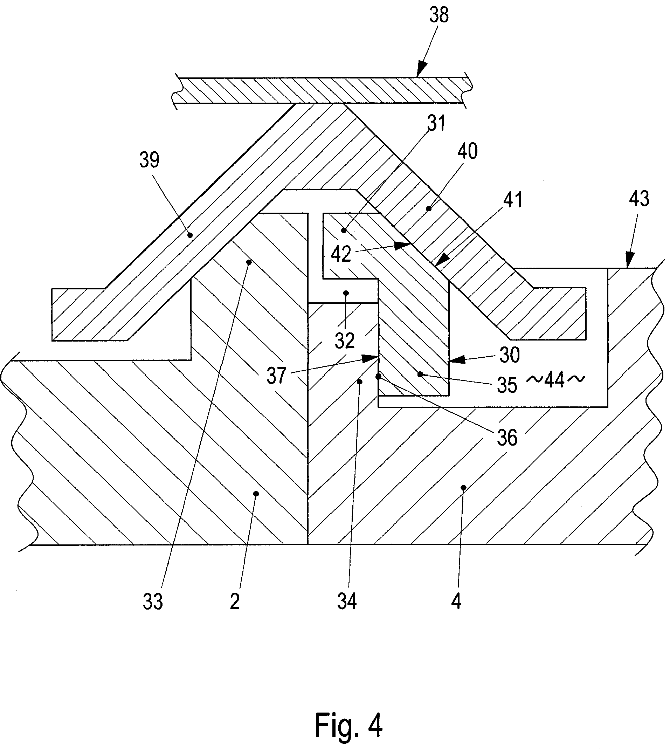

Bei einer zweiten Ausführungsform -Fig.4- weist ein Zwischenring 30 einen Axialabschnitt 31 auf, der berührungsfrei in eine Ausnehmung 32 zwischen erstem und zweitem Ringflansch 33 und 34 hineinragt. Der Axialabschnitt 31 bildet mit einem Radialabschnitt 35 eine winkelförmige Baueinheit, an deren Radialabschnitt 35 ein Spannflächenabschnitt 36 angebracht ist; letzterer wird gegen eine Innenstützfläche 37 des zweiten Ringflansches 34 gespannt. Dies erfolgt unter Vermittlung einer ähnlich wie die Bandklammer 5 gestaltete Bandklammer 38 mit ersten und zweiten V-förmig zueinander verlaufenden Schenkeln 39 und 40. Der zweite Schenkel 40 wirkt mit einer ersten Spannfläche 41 auf eine zweite Spannfläche 42 des Zwischenrings 30 ein. Zur Bildung des zweiten Ringflansches 34 ist in ein Abgaskrümmergehäuse 43 eine U-förmige Ausnehmung 44 eingearbeitet.

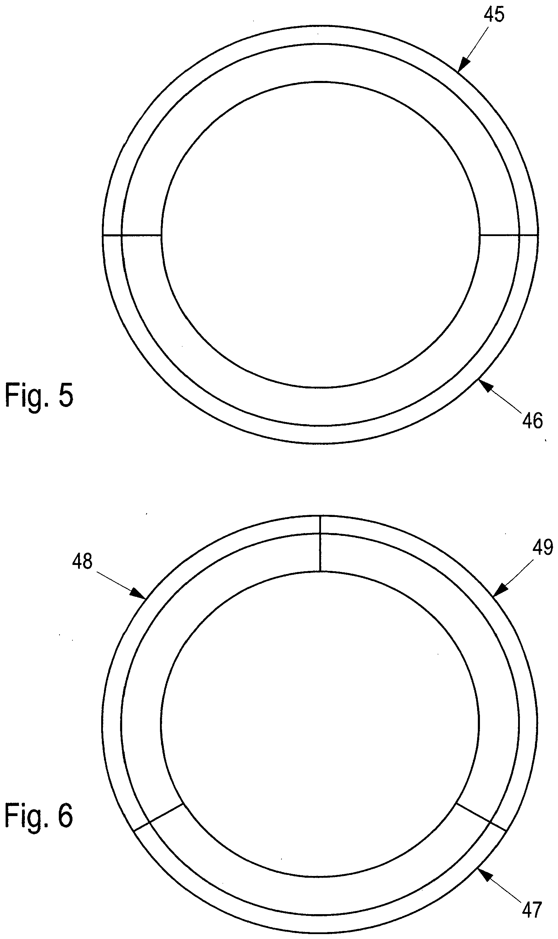

Zur Montage des Zwischenrings 24, der aus Stahl oder einem anderen geeigneten Werkstoff besteht, setzt er sich aus Ringhälften 45 und 46 -Fig. 5- oder Ringsegmenten 47, 48 und 49 zusammen.

Schließlich eignet sich als Werkstoff für das Turbinengehäuse 2 Eisenmetall und für das Abgaskrümmergehäuse Leichtmetall oder Verbundwerkstoff.

## Patentansprüche

1. Verbindungseinrichtung zwischen einem Turbinengehäuse eines Abgasturboladers und einem Anschlussgehäuse, vorzugsweise Abgaskrümmergehäuse einer Brennkraftmaschine, wobei das Turbinengehäuse und das Abgaskrümmergehäuse unter Vermittlung einer Bandklammer in Lage gehalten werden, die mit im Querschnitt V-förmig ausgerichteten über einen Steg verbundenen ersten und zweiten Schenkeln auf an äußeren Umfängen des Turbinengehäuses und des Abgaskrümmergehäuses angebrachten korrespondierenden und nach Art von aneinandergesetzten ersten und zweiten Ringflanschen ausgeführten Stützvorrichtungen einwirken, dergestalt, dass einerseits erste und zweite Spannflächen der Schenkel mit dritten und vierten Spannflächen der Stützvorrichtungen an ersten und zweiten Verbindungsebenen und andererseits erste und zweite radiale Stützflächen an einer Stützebene der Stützvorrichtungen miteinander in Wirkverbindung stehen, **dadurch gekennzeichnet, dass** zwischen der zweiten Spannfläche (18) des zweiten Schenkels (8) und einer Innenstützfläche (23) des zweiten Ringflansches (14) ein Zwischenring (24) wirksam ist, der über die zweite und vierte Spannflächen (18 und 20) sowie einem Spannflächenabschnitt (25) des Zwischenrings (24) gegen die Innenstützfläche (23) des zweiten Ringflansches (14) gespannt wird.

2. Verbindungseinrichtung nach Anspruch 1, **dadurch gekennzeichnet, dass** zur Bildung einer stufenförmigen Ausnehmung (26) zwischen den Ringflanschen (13 und 14) der zweite Ringflansch (14) einen kleineren Außendurchmesser (DI) als der erste Ringflansch (13) aufweist.

3. Verbindungseinrichtung nach den Ansprüchen 1 und 2, **dadurch gekennzeichnet, dass** der Zwischenring (30) einen äußeren in die Ausnehmung (32) hineinragenden Axialabschnitt (31) und einen von diesem Axialabschnitt (31) weggeführten den Spannflächenabschnitt (36) umfassenden, zu einer Mittellängsebene des Turbinengehäuses (2) hin gerichteten Radialabschnitt (35) aufweist, der einerseits mit dem Spannflächenabschnitt (36) auf eine Innenstützfläche (37) einwirkt und andererseits mit einer zweiten Spannfläche (42) mit einer ersten Spannfläche (41) kooperiert

4. Verbindungseinrichtung nach den Ansprüchen 1 und 2, **dadurch gekennzeichnet, dass** der Zwischenring (24) einen äußeren in die Ausnehmung (26) hineinragenden Axialabschnitt (24) und einen zu einer Mittellängseben des Turbinengehäuses (2) gleichgerichtet zur zweiten und vierten Spannfläche (18 und 20) verlaufenden mittleren Radialabschnitt (28) aufweist, an den ein innerer Radialabschnitt (29) anschließt, welcher innere Radialabschnitt (28) den Spannflächenabschnitt (25) besitzt, wobei der Zwischenring (24) über die Spanflächen (18 und 20) und den Spannflächenabschnitt (25) gegen die Innenstützfläche (23) des zweiten Ringflansches (14) gespannt wird.

5. Verbindungseinrichtung nach Anspruch 1, **dadurch gekennzeichnet, dass** das Turbinengehäuse (2) aus Stahl und das Abgaskrümmergehäuse (4) aus Leichtmetall hergestellt sind.

6. Verbindungseinrichtung nach den Ansprüche 1, 2 und 4, **dadurch gekennzeichnet, dass** der Zwischenring (24; 30) aus Stahl oder einem vergleichbaren Werkstoff besteht.

7. Verbindungseinrichtung nach Anspruch 1 **dadurch gekennzeichnet, dass** der Zwischenring (24; 30) aus Ringhälften (45 und 46) oder Ringsegmenten (47, 48 und 49) zusammengesetzt ist.

8. Verbindungseinrichtung nach Anspruch 1, **dadurch gekennzeichnet**, der zweite Ringflansch (34) der Verbindungseinrichtung (1) durch eine ringartige Ausnehmung (44) im Abgaskrümmergehäuse (4) gebildet wird.

9. Verbindungseinrichtung zwischen einem Turbinengehäuse eines Abgasturboladers und einem Anschlussgehäuse, vorzugsweise
Abgaskrümmergehäuse einer Brennkraftmaschine, wobei das Turbinengehäuse und das Abgaskrümmergehäuse unter Vermittlung einer Bandklammer in Lage gehalten werden, die mit im Querschnitt V-förmig ausgerichteten über eine Steg verbundenen ersten und zweiten Schenkeln auf an äußeren Umfängen des Turbinengehäuses und des Abgaskrümmergehäuses angebrachten korrespondierenden und nach Art von aneinandergesetzten ersten und zweiten Ringflanschen ausgeführten Stützvorrichtungen einwirken, dergestalt, dass einerseits erste und zweite Spannflächen der Schenkel mit dritten und vierten Spannflächen der Stützvorrichtungen an ersten und zweiten Verbindungsebenen und andererseits erste und zweite radiale Stützflächen an einer Stützebene der Stützvorrichtungen miteinander in Wirkverbindung stehen, **dadurch gekennzeichnet, dass** zwischen der zweiten Spannfläche (18) des zweiten Schenkels (8) und einer Innenstützfläche (23) des zweiten Ringflansches (14) ein als Kraftübertragungselement ausgebildeter Zwischenring (24) wirksam ist, der über die zweite und vierte Spannfläche (18 und 20) zwischen dem zweiten Schenkel (8) und dem Zwischenring (24) sowie einem Spannflächenabschnitt (25) des Zwischenrings (24) gegen eine Innenstützfläche (23) des zweiten Ringflansches (24) gespannt wird und dass das Turbinengehäuse (2) und das Abgaskrümmergehäuse (4) aus unterschiedlichen Werkstoffen bestehen.

10. Verbindungseinrichtung nach Anspruch 9, **dadurch gekennzeichnet, dass** das Turbinengehäuse aus (2) einem Eisenmetall, das Abgaskrümmergehäuse (4) aus Leichtmetall, Verbundwerkstoff oder dgl. und der Zwischenring aus Stahl bestehen.
